# EUROPEAN PATENT APPLICATION

(11) **EP 1 049 336 A2**
(43) Date of publication of application: **02.11.2000**
(21) Application number: 00303501.1
(22) Date of filing: 26.04.2000
(51) Int. Cl.: H04N 7/52

(54) **Establishing a datapipe in a video stream**

(30) Priority: 26.04.1999 US 130986 P; 25.04.2000 US 559816
(71) Applicant: Sarnoff Corporation, Princeton, NJ 08540-6449 (US)
(72) Inventor: Fedele, Nicola John, Kingston, NJ 08528 (US); Acampora, Alfonse Anthony, Staten Island, NY 10314 (US); Ihrie, David Wayne, Princeton Junction, NJ 08550 (US); Minnich, Ronald G., Los Alamos, NM 87544 (US)
(74) Representative: Pratt, Richard Wilson

(57) **Abstract**

A method and apparatus for establishing a "datapipe" in a digital transport stream. Specifically, opportunistic data are packetized into packets that are compliant with a particular transport protocol, e.g., as part of an MPEG transport stream. The opportunistic data are inserted into a multiple program per channel digital television transport stream. The opportunistic data are uniquely identified using at least one unique packet identification (PID) label that will allow a receiver to quickly determine whether a packet is carrying opportunistic data or television data.

## Description

This application claims the benefit of U.S. Provisional Application No. 60/130,986 filed on April 26, 1999, which is herein incorporated by reference.

The invention relates to a method and apparatus for establishing a datapipe in a digital transport stream. Specifically, the present invention describes a method for inserting data, especially opportunistic data, into a multiple program per channel digital television transport stream.

### BACKGROUND OF THE DISCLOSURE

With the ever-increasing proliferation of digital information, the concept of broadcasting digital information has gained wide acceptance. This transformation has presented both opportunities and challenges in broadcasting information in digital format.

Specifically, many television studios and stations are proceeding toward the goal of broadcasting many programs via digital television signals. Standards such as the Advanced Television System Committee (ATSC) and the Moving Picture Experts Group (MPEG) are examples of standards that have contributed greatly toward this goal. As infrastructures are built and deployed to handle the enormous amount of digital information, it is likely that the bandwidth for such transmission medium will be very large and very costly. Broadcasters, for example, will be eager to maximize the usage of this large bandwidth to recoup the cost of establishing and maintaining such infrastructures. It would be advantageous to exploit the availability of such bandwidth for our purposes while operating within the protocols that have already been established for the transmission of digital television signals.

For example, MPEG transport bitstreams or streams carry associated programs, usually comprised of Packetized Elementary Streams (PES) of video, audio and data associated with the video and audio signals. It would be advantageous to operate within this protocol to insert data, especially opportunistic data into the MPEG transport bitstream, for other purposes.

Therefore, there is a need in the art for an apparatus and method for establishing a datapipe in a digital transport stream.

### SUMMARY OF THE INVENTION

An embodiment of the present invention is a method and apparatus for establishing a "datapipe" in a digital transport stream. Specifically, opportunistic data are packetized into packets that are compliant with a particular transport protocol, e.g., as part of an MPEG transport stream. Namely, the opportunistic data are inserted into a multiple program per channel digital television transport stream. The opportunistic data are uniquely identified using at least one unique packet identification (PID) label that will allow a receiver to quickly determine whether a packet is carrying opportunistic data or television data. The unique use of at least one PID to identify all opportunistic data gives rise to the term, "datapipe". In turn, a "datacast guide" is also inserted into the transport stream, which will allow the receiver to further differentiate different types or subchannels of opportunistic data.

The present invention provides a dynamic method of inserting opportunistic data onto a television transport stream. This approach will allow a broadcaster to dynamically lease or share a portion of its available bandwidth for transmitting opportunistic data. The opportunistic data may include but is not limited to, internet data. Thus, a computer user or a data provider, e.g., an internet service provider (ISP) will be able to exploit the speed and bandwidth of infrastructures that were originally established for the transmission of digital television signals.

### BRIEF DESCRIPTION OF THE DRAWINGS

The teachings of the present invention can be readily understood by considering the following detailed description in conjunction with the accompanying drawings, in which:
FIG. 1 illustrates a block diagram of a simplified MPEG packet stream system of the present invention;
FIG. 2 illustrates a block diagram of an encoding system of the present invention;
FIG. 3 illustrates a block diagram of a preferred encoding system of the present invention;
FIG. 4 illustrates a block diagram of a decoding system of the present invention;
FIG. 5 illustrates a block diagram of a preferred decoding system of the present invention;
FIG. 6 illustrates a flowchart of a method for establishing a datapipe of the present invention; and
FIG. 7 illustrates an encoding system and a decoding system of the present invention.

To facilitate understanding, identical reference numerals have been used, where possible, to designate identical elements that are common to the figures.

### DETAILED DESCRIPTION

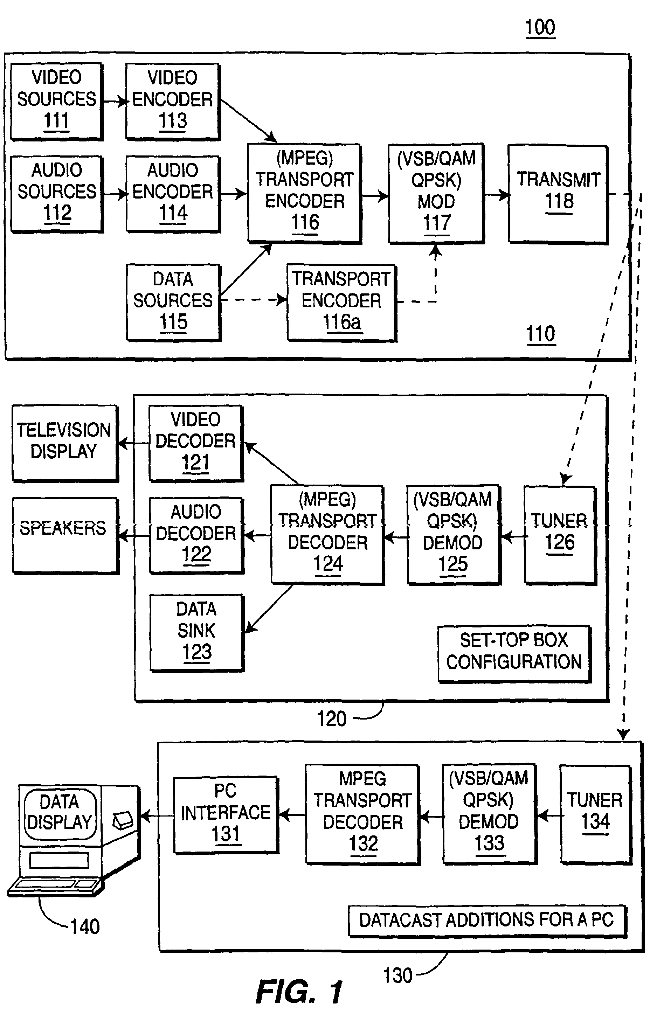

FIG. 1 depicts a block diagram of a simplified structure of a packet stream system 100 of the present invention. The packet stream system 100 is broadly illustrated as comprising an encoding system 110 (or broadly defined as a digital data transmitting system), a first decoding system 120 (or broadly defined as a receiver system) and a second decoding system 130. The first decoding system 120 is illustrated as a set-top box configuration, whereas the second decoding system 130 is illustrated as an add-on board or an external module to a personal computer (PC). It should be noted that two decoding systems are shown in FIG. 1 for illustrating two different configurations of decoding systems and therefore should not be interpreted as requiring two decoding systems for proper operation. Additionally, a single decoding system may optionally include both video/audio and data decoding, thereby providing the capability to display to either a television or a PC.

Transport stream as defined in accordance with the MPEG standards is used in the packet stream system illustrated in FIG. 1. Although the present invention is described below using the MPEG transport stream as an example, those skilled in the art will realize that the present invention can be applied to any other packet streams in accordance with other formats. Furthermore, although the present invention is described below using the term "stream" it should be understood that the various operations described below may be performed on the entire stream or portion thereof.

Encoding system 110 includes a video encoder 113, an audio encoder 114, a transport encoder 116, e.g., an MPEG transport encoder, a modulator 117 and a transmitter 118. In operation, video sources 111 are encoded into video elementary streams, whereas audio sources 112 are encoded into audio elementary streams. These video and elementary streams are then combined with data sources 115 (opportunistic data) in the transport encoder 116 to produce a transport stream. Alternatively, the video and audio can be combined to produce a transport stream via encoder 116, and then re-multiplexed with opportunistic data that are processed in an optional transport encoder 116a to form a combined transport stream.

It should be noted that "opportunistic data" is defined as data that is not related to data encompassed in the video and audio elementary streams of a primary service of the transport stream. Additionally, although opportunistic data is described as data that is transmitted as the opportunity exists for their transmission given the available bandwidth, it should be understood that for a particular application, a transmission system may reserve a minimum or a fixed bandwidth for their transmission. Namely, the opportunistic data may have a minimum throughput, but can achieve higher throughput as the conditions allow.

The modulator 117 will modulated the transport stream for transmission by the transmitter 118, e.g., vestigial side band (VSB) (broadcast), quadrature amplitude modulation (QAM) (cablecast), or quadrature phase-shift key (QPSK) (satellite) modulation. The method for combining the opportunistic data with the elementary video and audio streams will be further described below.

Decoding system 120 includes a video decoder 121, an audio decoder 122, a transport decoder 124, a data sink or storage 123, a demodulator 125 and a tuner 126. In operation, the tuner 126 will select the desired channel for receiving the transmitted signal that is then demodulated by the demodulator 125 to produce a transport stream. In turn, the transport decoder 124, e.g., an MPEG transport decoder, will decode the transport stream into video, audio and data (opportunistic data) streams which are then forwarded to video decoder 121, audio decoder 122 and data storage 123, respectively. The decoded video and audio signals are then forwarded to a display and speakers, respectively. The stored opportunistic data can be selectively recalled and displayed by the user The method for extracting the opportunistic data from the transport stream will be further described below.

Decoding system 130 includes, a PC interface module 131, a transport decoder 132, a demodulator 133 and a tuner 134. In operation, the tuner 134 will select the desired channel for receiving the transmitted signal that is then demodulated by the demodulator 133 to produce a transport stream. In turn, the transport decoder 132, e.g., an MPEG transport decoder, will extract data streams (opportunistic data) from the transport stream which is then forwarded to PC interface module 131. The PC interface will format the decoded data streams for transfer to a PC 140. Since the decoded video and audio streams may not be relevant to the PC application, these video and audio streams can be discarded if the PC has no capability to exploit the information carried on these streams.

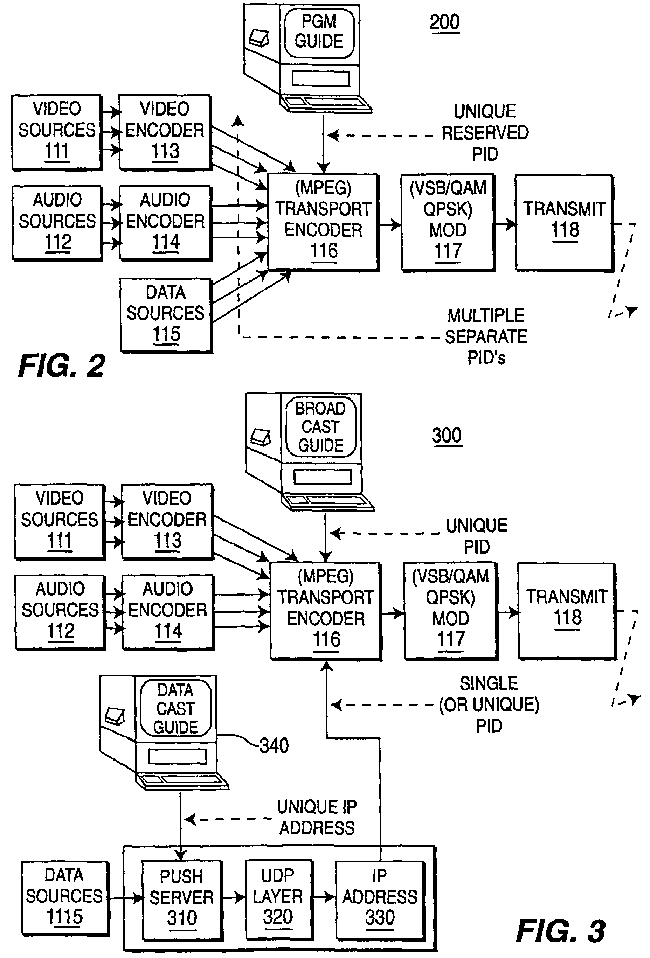

FIG. 2 illustrates a block diagram of an encoding system 200 of the present invention. FIG. 2 shows more details of the encoder system 110 of FIG. 1. Since the modules in FIG. 2 are the same as those in FIG. 1, same reference numerals have been used and the general description of the operation of each module is provided above.

However, in this embodiment, the video, audio, and data PES components are each assigned a separate 13 bit Packet Identification (PID) label by the transport stream encoder, denoted by OxHHHH. Namely, each opportunistic data source will be assigned a different PID.

In general, an electronic program guide (PGM guide) is also sent in packets with a reserved PID 0x1FFD. The entries in the program guide are channel and event descriptors that point to entries in a Program Association Table (PAT, also a reserved PID 0x0000), which entries then indirectly point to entries in a Program Map Table (PMT) where the PID's for the selected video, and associated audio and data are listed. The program guide can also make use of the ATSC Program and System Information Protocol (PSIP) tables with the ATSC established "base PID" of 0x1FFB. Namely, the electronic program guide will allow the decoding system to quickly identify a packet as a video, audio or data packet.

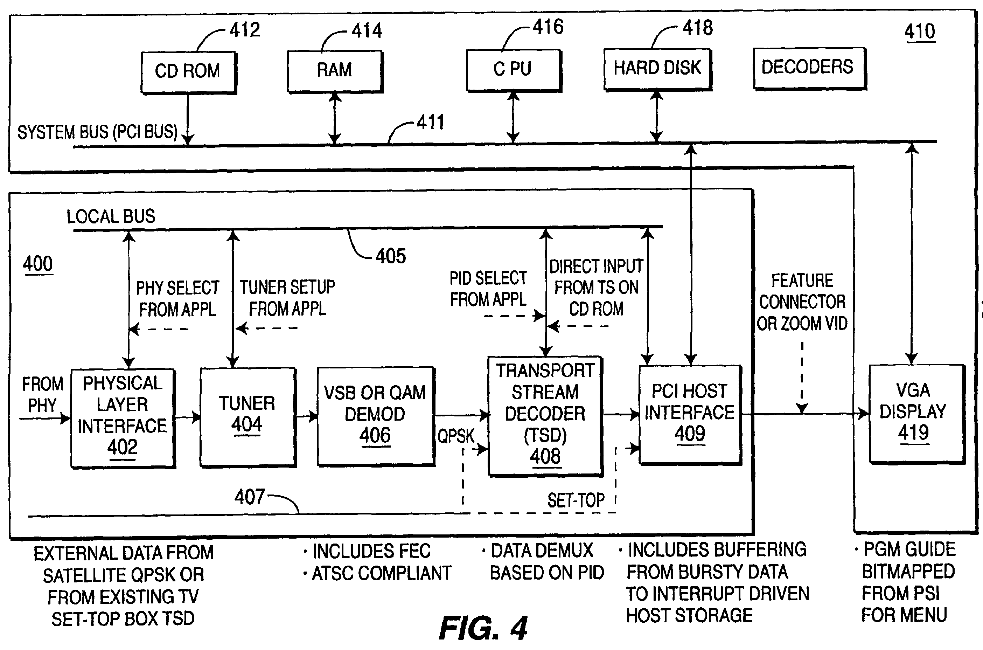

FIG. 4 illustrates a block diagram of a decoding system 400 of the present invention in operation with a PC 410. The decoding system 400 comprises a physical layer interface module 402, a tuner 404, a demodulator 406, a transport stream decoder 408 and a PC interface module 409.

In operation, the decoding system 400 has a physical layer interface module 402 that can interface with a variety of physical links (PHY), such as terrestrial, cable, external server (e.g., CD ROM), or satellite. Thus, the physical layer interface module 402 allows the user to select the physical link in which the transmitted signal is being received. These physical connections can be selected from application software residing in the computer 410.

The selected physical layer from terrestrial or cable will be sent to a tuner 404 for appropriate channel selection. The tuner 404 can also be controlled by the application software.

Next, the tuner IF output is sent to a data demodulator 406. Depending on the transmission method that is being employed, different demodulation methods will be required. For example, in the case of ATSC, a VSB demodulator is used. Cable systems may use other forms of data demodulation, such as QAM or QPSK. The selection of data demodulation method can also be selected by the application software.

The output of the demodulator 406 is a transport stream that is sent to the transport stream decoder (TSD) 408. The TSD demultiplexes the data packets from the aggregate bitstream by decoding the Program Identification (PID) in the transport stream headers. Namely, the recovered payloads of the opportunistic data are sent to the host 410 (or personal computer) via a system Bus Interface, shown as a PCI Host Interface 409 in FIG. 4.

The host 410 can store the opportunistic data in RAM 414, CD ROM 412, hard disk 418 or other storage media. Once the data is stored, the user may access and view the data at his or her leisure via a display 419. The operation of the data transfer is performed with the cooperation of the central processor unit (CPU) 416 of the host. It should be noted that all of the functions, up to and including the PCI Interface of the decoding system 400 can be implemented on a card, that is compatible with expansion slots of the host.

A feature of the present system is that program specific information (PSI) pertaining to the opportunistic data can be extracted from the MPEG transport bitstream. Namely, the MPEG standards already support PSI which contains information about the program and its constituent elementary streams. By cleverly exploiting this general established protocol, the Electronic Program Guide (EPG), Program Map Tables (PMT) and the Program Association Tables (PAT) can be extracted and the opportunistic data can be easily displayed via the video graphics adapter (VGA) card in the computer. The information contained in the PSI will allow a menu to be formed from which the user can select data streams for access (with appropriate password security, if so desired).

Data program selection menus can also be formed from the Program and System Information Protocol (PSIP) tables, recently developed by the Advanced Television Systems Committee (ATSC) in the ATSC standards document, A/65, which defines the standard protocol for transmission of the relevant table data contained within packets in a Transport Stream multiplex with the "base PID" of 0x1FFB. The relevant base PID (BPID) tables are:
The Virtual Channel Table (VCT) defining, at a minimum, MPEG-2 programs embedded in the Transport Stream in which the VCT is carried.
The Master Guide Table (MGT) defining the type, packet identifiers, and versions for all the other PSIP tables (such as EIT, described below) in this Transport Stream, except for the System Time Table (STT).
The System Time Table (STT), defining the current date and time of day.
The Rating Region Table (RRT) defining the TV parental guideline system referenced by any content advisory descriptor carried within the Transport Stream.
Additionally, there are as many as 128 Event Information Tables (EIT), and 128 corresponding Extended Text Tables (ETT), each set with a coverage of 3 hours (for a maximum total of 16 days) that describe TV programming events for all virtual channels listed in the VCT. The EIT's have individual Packet Identifications (PID's) that are listed in the MGT. The VCT and EIT are effective in providing data program selection information to the user.

Additionally, external transport stream data, from external servers, or satellite modems can be routed directly to the TSD 408 via path 407. Namely, the opportunistic data may be in such a format that the functions performed by the physical layer interface 402, tuner 404 and demodulator 406 can be omitted.

The configuration of the decoding system 400 of FIG. 4 provides several advantages. First, the decoding system will use the local bus 405 in performing many of its functions in obtaining the opportunistic data, thereby minimizing traffic on the PCI bus 411. Namely, the decoding system will minimize the computation burden on the host 410.

Second, various options and controls are selectively set from the application programs that are residing in the host. This will allow ease of adaptation for future functionalities and a reduction in the complexity of the decoding system hardware.

Third, the present invention provides the ability to display the available data services (i.e., various opportunistic data) from a combination of the EPG, PAT, and PMT entries in the transport stream. Namely, the existing structure of the transport stream can be exploited to provide the ability to display the available data services.

FIG. 3 illustrates a block diagram of a preferred encoding system 300 of the present invention. FIG. 3 shows more details of the encoder system 110 of FIG. 1. Since various modules in FIG. 3 are the same as those in FIGs. 1 and 2, same reference numerals have been used and the general description of the operation of each module is provided above.

However, in this preferred embodiment, all opportunistic data sources 115 are assigned a single (or unique) PID, thereby establishing a "datapipe". Namely, the single opportunistic data stream is assigned one PID in the TSE 116, either uniquely (0x1FFC, for example), or assigned in the User Private PID (UP PID) descriptor in the EPG.

Specifically, the data is assembled in a "push server" 310, where a datacast guide 340 is inserted with the various opportunistic data sources 115. The term "push server" indicates that the data stream is formed without any input from the receiver, i.e., the data stream is simply formed and is ready for transmission (whether it is transmitted now or later). In the preferred embodiment, the opportunistic data is assembled by the push server 310 where each data service has its own, separate data address, e.g., User Datagram Protocol (UDP)/IP address. Namely, the push server 310 is tasked with applying a unique data address to each opportunistic data source. The opportunistic data sources 115 may comprise a plurality of distinct data sources, e.g., information from a web site providing sports data, information from a web site providing news data, information from a web site providing financial data, and so on. Although all these different opportunistic data sources will be packetized into the transport stream using only a single PID, separate data (or UDP/IP) address will be assigned to each opportunistic data source. This mechanism will allow a decoding system to differentiate different opportunistic data sources and to present them in a menu to a user.

The reader should take notice that in strict networking terms of the protocol hierarchy, encapsulation means that UDP prepends a header to the data that the user sends, thereby forming the user datagram, and passes it to the IP. The IP layer prepends a header to what it receives from the UDP, thereby forming an IP datagram. In networking, the network interface layer embeds the IP datagram in a frame, dependent upon the physical layer i.e., Ethernet, ATM etc., before sending it from one machine (server) to another.

However, in the present invention, the framing of the IP datagram is accomplished in the MPEG transport encoder by sending the IP datagram as 184 byte of payloads in Transport Packets with the unique PID 0x1FFc, in one example. This forms a unique datapipe within a transport stream and allows the present invention to use UDP and IP differently than the typical network scheme.

The datacast guide 340 serves as a map or a look-up table of data addresses or IP addresses, thereby linking or pointing an address to a particular opportunistic content. Thus, the data program guide (DPG) is inserted within the transport stream with a unique IP address. Therefore, the broadcaster's video programming in the EPG and the DPG can be administered separately. The PC simply has to handle only a single PID, and can separate the various data sources in an IP address basis by using the data program guide (DPG).

It should be noted that the UDP layer module 320 applies an UDP formatting on the data sources to provide consistency and compatibility with existing software that generates and uses UDP/IP layering and the IP address module 330 generates a data or IP address for each data source or service. Although the push server 310, UDP layer module 320 and IP address module 330 are shown as separate modules, those skilled in the art will realize that the functions performed by these modules can be implemented in a single module.

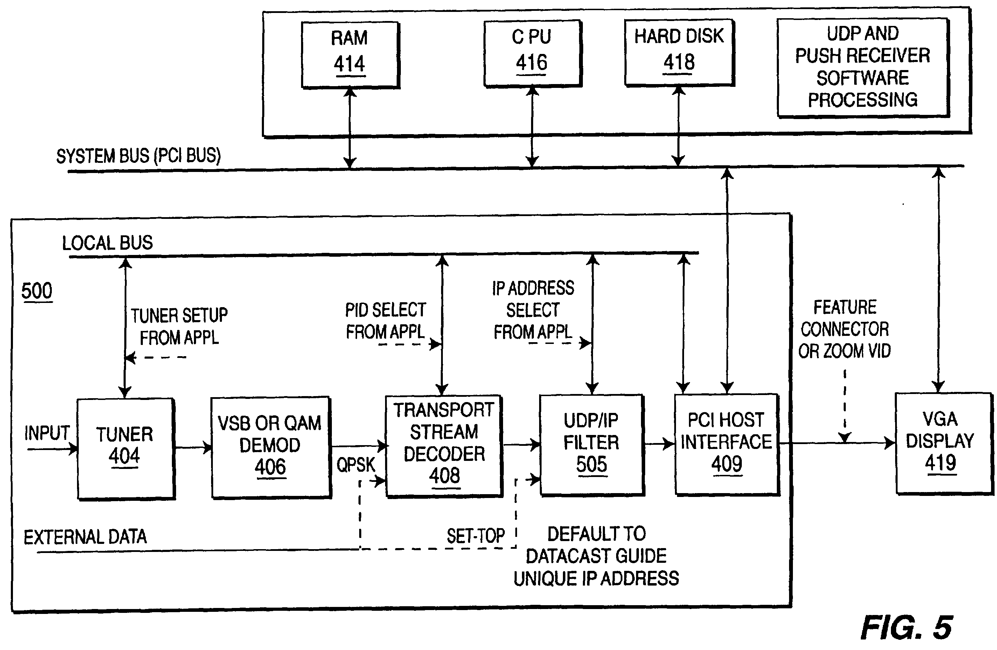

FIG. 5 illustrates a block diagram of a preferred decoding system 500 of the present invention. FIG. 5 shows more details of the decoder system of FIG. 1. Since various modules in FIG. 5 are the same as those in FIGs. 1 and 4, same reference numerals have been used and the general description of the operation of each module is provided above.

In this preferred embodiment, the decoding system 500 comprises an additional data address (UDP or IP address) filter 505. Specifically, since one PID retrieves all the opportunistic data from the transport stream, the output from transport stream decoder 408 can be fed into a data address filter 505 that is defaulted to the data address of the datacast guide. The unique IP address for the DPG is extracted. In other words, the data address filter 505 can quickly obtain the datacast guide and then efficiently distinguishes the various data sources. This has the additional advantage of relieving the host from having to search through the EPG, PAT, and PMT entries. User selection of a particular opportunistic data service is accomplished on an IP address basis, and only that IP address is filtered through to the PCI bus, thereby increasing efficiency.

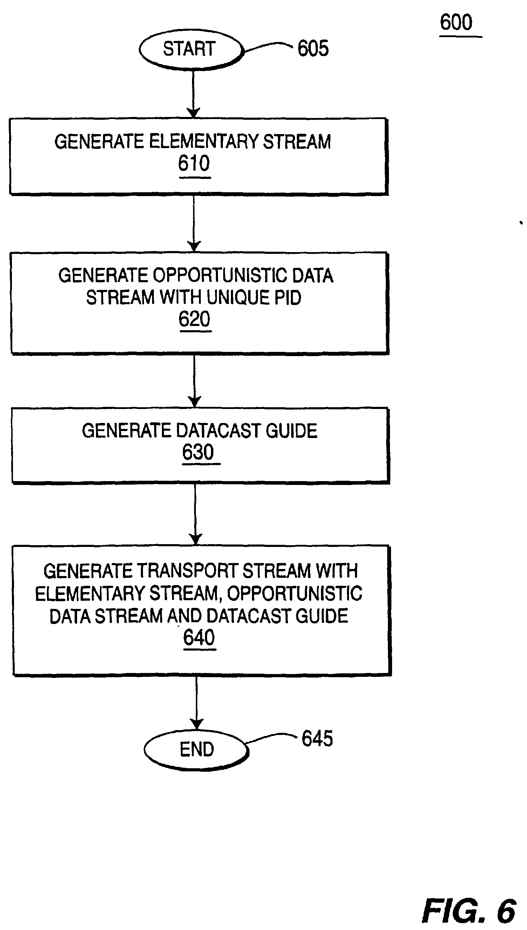

FIG. 6 illustrates a flowchart of a method 600 for establishing a datapipe of the present invention. Specifically, FIG. 6 summarizes the present invention in a flowchart format.

Method 600 starts in step 605 and proceeds to step 610, where method 600 generates a regular elementary stream. Namely, elementary video and/or audio streams associated with a program, e.g., a television program, are generated to be carried in a transport stream.

In step 620, method 600 generates an opportunistic data stream. Namely, opportunistic data streams associated with one or more data sources 115 are generated to be carried in a transport stream.

In step 630, method 600 generates a datacast guide or data program guide (DPG)for the opportunistic data streams. Namely, the datacast guide serves as a look-up table of data or IP addresses to differentiate different opportunistic data sources or data services that are being forwarded in the transport stream. The datacast guide, itself, is assigned a unique IP address so that the decoding system can rapidly obtain the datacast guide from the transport stream. It should be noted that if the application of the present invention is for a dedicated opportunistic data source, then it is possible to omit the datacast guide since the data carried in the datapipe comprises only a single source of opportunistic data. Thus, no differentiation is necessary. Similarly, if a unique PID is assigned to each opportunistic data source, then the datacast guide can also be omitted, since the unique PID can be used to identify an opportunistic data source.

In step 640, the regular elementary stream, the opportunistic data stream and optionally the datacast guide are inserted into a transport stream. In one embodiment, the transport stream encoder will assign a unique PID to each opportunistic data source. However, in a preferred embodiment, a unique PID is assigned to a plurality of opportunistic data sources.

Method 600 then ends in step 645. It should be noted that steps 610, 620 and 630 can be implemented in parallel since there are no dependencies between these steps.

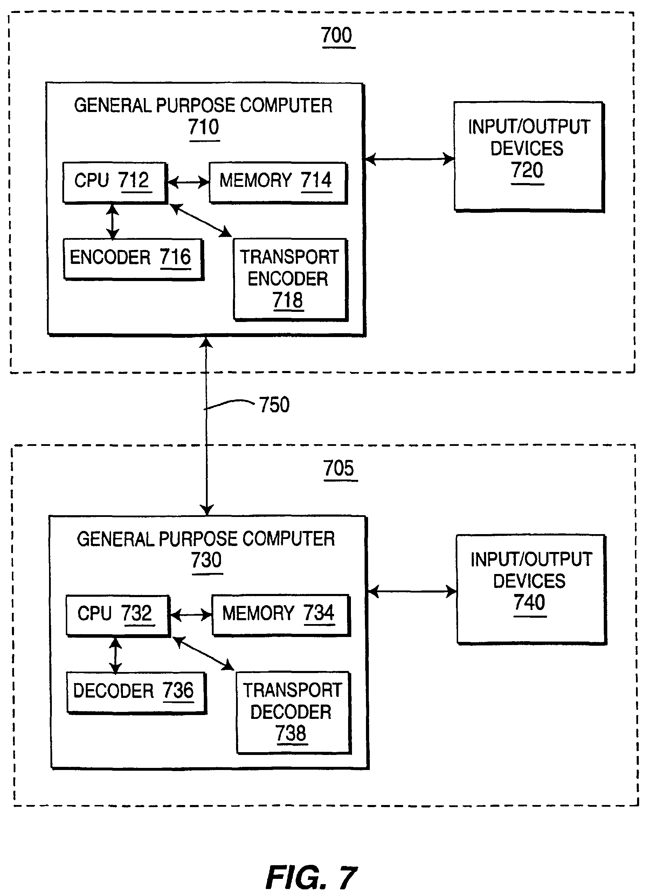

FIG. 7 illustrates an encoding system 700 and a decoding system 705 of the present invention. The encoding system 700 comprises a general purpose computer 710 and various input/output devices 720. The general purpose computer comprises a central processing unit (CPU) 712, a memory 1714, an encoder 716 for receiving and encoding a sequence of images and a transport encoder 718.

In the preferred embodiment, the encoder 716 and transport encoder 718 are simply the video encoder 113 and transport encoder 116, respectively, as discussed above. The encoder 716 and transport encoder 718 can be physical devices which are coupled to the CPU 712 through communication channels. Alternatively, the encoder 716 and transport encoder 718 can be represented by a software application (or a combination of software and hardware, e.g., application specific integrated circuit (ASIC))which is loaded from a storage device, e.g., a magnetic or optical disk, and resides in the memory 714 of the computer. In fact, other modules for processing opportunistic data of FIG. 3 can be implemented as part of the encoding system 700. As such, the encoder 716, the transport encoder 718 and other modules for processing opportunistic data of the present invention can be stored on a computer readable medium, including the bitstreams generated by these encoders.

The computer 710 can be coupled to a plurality of input and output devices 720, such as a keyboard, a mouse, a camera, a camcorder, a video monitor, any number of imaging devices or storage devices, including but not limited to, a tape drive, a floppy drive, a hard disk drive or a compact disk drive. The input devices serve to provide inputs to the computer for producing the encoded video bitstreams or to receive the sequence of video images from a storage device or an imaging device.

The encoding system is coupled to the decoding system via a communication channel 750. The present invention is not limited to any particular type of communication channel.

The decoding system 705 comprises a general purpose computer 730 and various input/output devices 740. The general purpose computer comprises a central processing unit (CPU) 732, a memory 734, an decoder 736 for receiving and decoding a sequence of encoded images and a transport decoder 738.

In the preferred embodiment, the decoder 736 and transport decoder 738 are simply the video decoder 121 and transport decoder 124, 132 respectively, as discussed above. It should be noted that although the decoder 121 is not specifically described, those skilled in the art will realize that decoder 121 can be any decoder that is complementary to the encoder 113 as discussed above for decoding the bitstreams generated by the encoder 114. The decoder 736 and transport decoder 738 can be physical devices which are coupled to the CPU 732 through communication channels. Alternatively, the decoder 736 and transport decoder 738 can be represented by a software application which is loaded from a storage device, e.g., a magnetic or optical disk, and resides in the memory 734 of the computer. As such, any complementary decoder of the encoder 114 and the transport decoder 738 of the present invention can be stored on a computer readable medium.

The computer 730 can be coupled to a plurality of input and output devices 740, such as a keyboard, a mouse, a video monitor, or any number of devices for storing or distributing images, including but not limited to, a tape drive, a floppy drive, a hard disk drive or a compact disk drive. The input devices serve to allow the computer for storing and distributing the sequence of decoded video images.

Although various embodiments which incorporate the teachings of the present invention have been shown and described in detail herein, those skilled in the art can readily devise many other varied embodiments that still incorporate these teachings.

## Claims

1. An apparatus for establishing a datapipe, said apparatus comprising:
an encoder for generating an elementary stream; and
a transport encoder, coupled to said encoder, for generating a transport stream comprising said elementary stream and an opportunistic data stream, wherein said opportunistic data stream is assigned at least one packet identifier (PID).

2. A method for establishing a datapipe, said method comprising the steps of:
(a) generating an elementary stream; and
(b) generating a transport stream comprising said elementary stream and an opportunistic data stream, wherein said opportunistic data stream is assigned at least one packet identifier (PID).

3. The method of claim 2, wherein said opportunistic data stream comprises opportunistic data from a plurality of opportunistic sources.

4. The method of claim 3, wherein said at least one packet identifier (PID) comprises a plurality of PIDs with each of said PIDs assigned to one of said plurality of opportunistic data sources.

5. The method of claim 2, further comprising the step of:
(c) assigning each of said plurality of opportunistic sources a data address.

6. The method of claim 5, further comprising the step of
(d) generating a datacast guide.

7. A computer-readable medium having stored thereon a plurality of instructions, the plurality of instructions including instructions which, when executed by a processor, cause the processor to perform the steps comprising of:
(a) generating an elementary stream; and
(b) generating a transport stream comprising said elementary stream and an opportunistic data stream, wherein said opportunistic data stream is assigned at least one packet identifier (PID).

8. An apparatus for receiving opportunistic data in a transport stream, said apparatus comprising:
a transport decoder for decoding a transport stream into an elementary stream and an opportunistic data stream; and
a filter, coupled to said transport decoder, for identifying said opportunistic data stream by at least one packet identifier (PID) uniquely reserved for said opportunistic data stream.

9. A method for receiving opportunistic data in a transport stream, said method comprising the steps of:
(a) decoding a transport stream into an elementary stream and an opportunistic data stream; and
(b) identifying said opportunistic data stream by at least one packet identifier (PID) uniquely reserved for said opportunistic data stream.

10. A computer-readable medium having stored thereon a plurality of instructions, the plurality of instructions including instructions which, when executed by a processor, cause the processor to perform the steps comprising of:
(a) decoding a transport stream into an elementary stream and an opportunistic data stream; and
(b) identifying said opportunistic data stream by at least one packet identifier (PID) uniquely reserved for said opportunistic data stream.
